(19) Europäisches Patentamt
European Patent Office
Office européen des brevets

(11) Veröffentlichungsnummer : **0 057 822**
**B1**

(12) # EUROPÄISCHE PATENTSCHRIFT

(45) Veröffentlichungstag der Patentschrift : **02.05.84**

(51) Int. Cl.³ : **C 01 B 25/30**, B 01 J 2/00

(21) Anmeldenummer : **82100240.9**

(22) Anmeldetag : **14.01.82**

(54) **Verfahren zur Herstellung von granulierten Alkaliorthophosphaten.**

(30) Priorität : **07.02.81 DE 3104403**

(43) Veröffentlichungstag der Anmeldung : **18.08.82 Patentblatt 82/33**

(45) Bekanntmachung des Hinweises auf die Patenterteilung : **02.05.84 Patentblatt 84/18**

(84) Benannte Vertragsstaaten : **AT BE DE FR GB IT NL SE**

(56) Entgegenhaltungen :
**DE-A- 2 024 439**
**DE-A- 2 744 753**
**DE-C- 674 515**
**DE-C- 1 792 158**
**DE-C- 2 008 495**

(73) Patentinhaber : **HOECHST AKTIENGESELLSCHAFT**
**Postfach 80 03 20**
**D-6230 Frankfurt am Main 80 (DE)**

(72) Erfinder : **Maurer, Alexander, Dr.**
**Am grünen Weg 7**
**D-5030 Hürth (DE)**
Erfinder : **Adrian, Renate**
**Grosse Ölbruchstrasse 39**
**D-5030 Hürth (DE)**

**EP 0 057 822 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von granulierten Alkaliorthophosphaten

Alkaliorthophosphate finden in vielen Bereichen Anwendung. Dabei werden sie meistens in pulvriger oder grobkristalliner Form eingesetzt. Um eine leichtere und staubarme Handhabung zu ermöglichen, ist es in bestimmten Fällen wünschenswert, die Alkaliorthophosphate in granulierter Form zu verwenden. Geeignete Verfahren zur Herstellung solcher Granulate mit hoher Abriebfestigkeit aus pulverförmigen Alkaliorthophosphaten stehen zur Zeit nicht zur Verfügung.

Aus der Herstellung von Düngemitteln ist es bekannt, Superphosphate vor ihrer Anwendung zu granulieren. Gemäß Winnacker-Küchler, Chemische Technologie (1970) Band I, Seite 371 erfolgt das Granulieren des gemahlenen Superphosphates in einer Trommel unter Aufsprühen von Wasser, wonach das Granulat in einer zweiten Trommel getrocknet wird. Eine Übertragung dieser Arbeitsweise auf die Granulierung von pulverförmigen Alkaliorthophosphaten führt jedoch zu nicht-abriebfesten Produkten, die nicht lagerfähig sind und nach kurzer Zeit verklumpen.

Weiterhin ist die Herstellung von Alkalitriphosphaten in Granulatform bekannt. So wird z. B. in der DE-PS 20 08 495 ein Verfahren zur Herstellung von körnigem Alkalipolyphosphat beschrieben, bei welchem man Alkalitriphosphat bestimmter Korngröße unter Aufsprühen einer wäßrigen Alkaliorthophosphatlösung granuliert, das Granulat trocknet und durch Erhitzen auf Temperaturen zwischen 300 und 600 °C calciniert. Diese Verfahrensweise führt zwar zu einem NTPP-Granulat gewünschter Körnung und Eigenschaften, jedoch stellen die im Anschluß an die Granulierung erfolgende Trocknung und Calcinierung energieintensive Verfahrensschritte dar, die gerade in einer Zeit steigender Energiekosten eingespart werden sollten.

Die Nachteile der bekannten Verfahren werden durch die vorliegende Erfindung überwunden.

Gegenstand der Erfindung ist ein Verfahren zur Herstellung von granulierten, teilweise oder vollkommen hydratisierten Alkaliorthophosphaten, welches dadurch gekennzeichnet ist, daß man wasserfreie oder teilhydratisierte Alkaliorthophosphate mit einem Hydratationsgrad von weniger als 90 %, bezogen auf den theoretisch möglichen Hydratationsgrad, sowie einem Anteil an einer Kornfraktion < 0,045 mm von mindestens 20 % in Gegenwart von Wasser in einer Menge, die höchstens eine vollkommene Hydratation der Alkaliorthophosphate bewirkt, sowie einem Ammoniumpolyphosphat intensiv mischt und granuliert, wobei das Ammoniumpolyphosphat einen Kondensationsgrad von 3 bis 1 000, vorzugsweise von 10-1 000, besitzt und in einer Menge von 0,5 bis 8 Gew.%, bezogen auf die eingesetzte Wassermenge, verwendet wird.

Als Alkaliorthophosphate werden pulverisierte wasserfreie oder teilhydratisierte Produkte, die einen Anteil an einer Kornfraktion < 45 µm von mindestens 20 %, vorzugsweise von über 50 %, aufweisen, eingesetzt. Beispielsweise eignet sich zur Granulierung ein wasserfreies Alkaliorthophosphat mit einer Korngrößenverteilung von < 0,045 mm = 20-100 %, 0,045-0,1 mm = 0-80 %, > 0,1 mm = 0-50 %.

Der Feinkornanteil des Phosphates dient dazu, die Hohlräume innerhalb des Granulates auszufüllen und somit die Teilchen zu festigen. Die Orthophosphate können sowohl in kristalliner als auch amorpher Form eingesetzt werden und müssen lediglich in der Lage sein, noch genügend Wasser zur Hydratbildung aufnehmen zu können. Vorteilhafterweise ist das eingesetzte teilweise hydratisierte Alkaliorthophosphat zu 0,05 bis 50 % hydratisiert.

Was die zur Granulierung erforderliche Wassermenge betrifft, so ist diese vorteilhafterweise derart zu bemessen, daß mindestens 10 Gew.%, bezogen auf das wasserfreie Alkaliorthophosphat, eingesetzt werden.

Das erfindungsgemäß vorgeschlagene Ammoniumpolyphosphat entspricht der allgemeinen Formel

$$H_{(n-m)+2}(NH_4)_mP_nO_{3n+1}$$

in welcher n einen ganzzahligen Durchschnittswert von 3 bis 1 000, vorzugsweise 10-1 000, ist, m eine ganze Zahl bis maximal n + 2 bedeutet und m/n 1,0 bis 1,67 beträgt.

Die Durchführung des vorbeschriebenen Verfahrens kann beispielsweise derart erfolgen, daß man ein Gemisch aus dem wasserfreien oder teilweise hydratisierten Alkaliorthophosphat und dem Ammoniumpolyphosphat unter intensivem Mischen mit Wasser besprüht oder auf das vorgelegte Alkaliorthophosphat eine wäßrige, etwa 0,5 bis 5 gewichtsprozentige Lösung oder Suspension des Ammoniumpolyphosphates aufsprüht. Hierbei beträgt die Menge des Ammoniumpolyphosphates vorzugsweise 0,5 bis 5 Gew.%, bezogen auf die eingesetzte Wassermenge. Der Granulierungsprozeß kann in üblichen, dafür geeigneten Vorrichtungen, wie Granulierteller, Granuliertrommel, Mischer, Drehrohr, Wirbelschichttrockner und dergleichen durchgeführt werden. Die Granulierflüssigkeit wird dabei über eine Düse auf das feste Phosphat aufgesprüht, wobei das Wasser durch eine chemische Reaktion gebunden wird. Man erhält so durch Vermeidung eines Wasserüberschusses ein festes, trockenes Granulat, so daß sich eine nachträgliche Trocknung und Calcinierung des Granulates erübrigt.

Am Beispiel der Granulierung des Natriumdihydrogenphosphates sei bemerkt, daß das erfindungsgemäß hergestellte Granulat einen Wassergehalt besitzt, der höchstens dem des Dihydrates entspricht. Daher braucht es nach dem Granulieren weder getrocknet noch calciniert zu werden.

Trotz fehlender Trocknung und Calcinierung besitzt das Granulat eine hohe Festigkeit und kann

daher beispielsweise Waschmittelformulierungen im trockenen Zustand zugemischt werden. Beim Auflösen in Wasser neigt das Granulat nicht zur Klumpenbildung, wobei auch durch den Gehalt an Ammoniumpolyphosphat keine unlöslichen Anteile im Wasser beobachtet wurden, was im Falle des Einsatzes des Granulats in Waschmittel von Bedeutung ist.

Wird ein Granulat mit einer bestimmten Korngrößenverteilung gewünscht, so kann dieses aus dem beim Granulierungsverfahren unmittelbar anfallenden Produkt in einer Siebeinrichtung ausgesiebt werden.

Das erfindungsgemäße Verfahren wird durch die folgenden Beispiele näher erläutert :

## Beispiel 1

Auf einem rotierenden Drehteller von 1 m Durchmesser wurden 15 kg wasserfreies $NaH_2PO_4$ mit einem $P_2O_5$-Gehalt von 59 % und einem Anteil einer Kornfraktion < 45 µm von 94 % während 30 Minuten mit einer 4 gewichtsprozentigen Lösung von Ammoniumpolyphosphat einer mittleren Kettenlänge von 270 in Wasser besprüht. Es wurde ein hartes abriebfestes Granulat einer mittleren Korngröße von 1,2 mm erhalten, welches auch nach 4-wöchiger Lagerung in einem Plastiksack noch nicht verklumpt war. Das Granulat besaß folgende Eigenschaften :

| | |
|---|---|
| $P_2O_5$-Gehalt | 52,0 Gew.% |
| $H_2O$-Gehalt | 12,1 Gew.% |
| Schüttgewicht | 693 g/l |
| Abriebfestigkeit (Trommeltest) | 80 % |

Kornverteilung

> 2,0 mm = 12,9 %
> 0,7 mm = 86,8 %
> 0,35 mm = 96,7 %
> 0,2 mm = 98,6 %
< 0,2 mm = 1,4 %

## Beispiel 2

Es wurde analog Beispiel 1 verfahren, wobei jedoch 20 kg wasserfreies $Na_2HPO_4$ mit einem $P_2O_5$-Gehalt von 48 % und einem Anteil einer Kornfraktion < 0,045 mm von 51 % eingesetzt wurden. Es wurde ebenfalls ein hartes abriebfestes Granulat erhalten, das bei 4-wöchiger Lagerung im Plastiksack stabil blieb und nicht klumpte. Das Granulat besaß folgende Eigenschaften :

| | |
|---|---|
| $P_2O_5$-Gehalt | 40,3 Gew.% |
| $H_2O$-Gehalt | 20,7 Gew.% |
| Schüttgewicht | 708 g/l |
| Abriebfestigkeit | 85 % |

Kornverteilung

> 2,0 mm = 7,1 %
> 0,7 mm = 81,8 %
> 0,35 mm = 92,5 %
> 0,2 mm = 97,1 %
< 0,2 mm = 2,9 %

## Beispiel 3

Es wurde analog Beispiel 1 verfahren. Zum Einsatz kamen jetzt 20 kg wasserfreies $Na_3PO_4$ mit einem $P_2O_5$-Gehalt von 40 % und einem Anteil einer Kornfraktion < 0,045 mm von 91 %. Es wurde ein hartes abriebfestes Granulat erhalten, das auch bei 4-wöchiger Lagerung im Plastiksack stabil blieb und nicht klumpte. Das Granulat besaß folgende Eigenschaften :

| | |
|---|---|
| $P_2O_5$-Gehalt | 30,1 Gew.% |
| $H_2O$-Gehalt | 31,7 Gew.% |
| Schüttgewicht | 730 g/l |
| Abriebfestigkeit | 89 % |

Kornverteilung

> 2,0 mm = 5,4 %

$>$ 0,7 mm = 72,0 %
$>$ 0,35 mm = 88,9 %
$>$ 0,2 mm = 95,1 %
$<$ 0,2 mm = 4,9 %

Beispiel 4 (Vergleichsbeispiel)

Es wurde wie in Beispiel 1 verfahren, wobei jedoch zur Granulierung lediglich Wasser verwendet wurde. Es wurde ein Granulat mit der nachfolgenden Kornverteilung erhalten mit einem erhöhten Anteil der Kornfraktion < 0,2 mm und einem deutlich schlechteren Abriebverhalten. Außerdem war das Granulat nicht lagerfähig, da es Haftwasser enthielt und dadurch im Polyethylensack bereits nach 3 Tagen zu klumpen begann. Das Granulat hatte folgende Eigenschaften :

| | |
|---|---|
| $H_2O$-Gehalt | 24,3 % |
| Schüttgewicht | 570 g/l |
| Abriebfestigkeit | 60 % |

Kornverteilung

$>$ 2,0 mm = 3,1 %
$>$ 0,7 mm = 18,0 %
$>$ 0,35 mm = 48,6 %
$>$ 0,2 mm = 84,5 %
$<$ 0,2 mm = 15,5 %

**Ansprüche**

1. Verfahren zur Herstellung von granulierten, teilweise oder vollkommen hydratisierten Alkaliorthophosphaten, dadurch gekennzeichnet, daß man wasserfreie oder teilhydratisierte Alkaliorthophosphate mit einem Hydratationsgrad von weniger als 90 %, bezogen auf den theoretisch möglichen Hydratationsgrad, sowie einem Anteil an einer Kornfraktion < 0,045 mm von mindestens 20 % in Gegenwart von Wasser in einer Menge, die höchstens eine vollkommene Hydratation der Alkaliorthophosphate bewirkt, sowie einem Ammoniumpolyphosphat intensiv mischt und granuliert, wobei das Ammoniumpolyphosphat einen Kondensationsgrad von 3 bis 1 000 besitzt und in einer Menge von 0,5 bis 8 Gew.%, bezogen auf die eingesetzte Wassermenge, verwendet wird.

2. Verfahren nach Anspruch 1, dadurch gekennzeichnet, daß man wasserfreies Alkaliorthophosphat mit einer Korngrößenverteilung von < 0,045 mm = 20-100 %, 0,045-0,1 mm = 0-80 %, > 0,1 mm = 0-50 % granuliert.

3. Verfahren nach Anspruch 1 oder 2, dadurch gekennzeichnet, daß das eingesetzte teilweise hydratisierte Alkaliorthophosphat zu 0,05 bis 50 % hydratisiert ist.

4. Verfahren nach Anspruch 1-3, dadurch gekennzeichnet, daß man zur Granulierung eine Wassermenge von mindestens 10 Gew.%, bezogen auf das wasserfreie Alkaliorthophosphat, einsetzt.

5. Verfahren nach Anspruch 1 bis 4, dadurch gekennzeichnet, daß das Ammoniumpolyphosphat der allgemeinen Formel

$$H_{(n-m)+2}(NH_4)_mP_nO_{3n+1}$$

in welcher n einen ganzzahligen Durchschnittswert von 3 bis 1 000 ist, m eine ganze Zahl bis maximal n + 2 bedeutet und m/n 1,0 bis 1,67 beträgt, entspricht.

6. Verfahren nach Anspruch 1 bis 5, dadurch gekennzeichnet, daß man zur Herstellung des Granulates ein Gemisch aus dem wasserfreien oder teilweise hydratisierten Alkaliorthophosphat und dem Ammoniumpolyphosphat unter intensivem Mischen mit Wasser besprüht oder auf das vorgelegte Alkaliorthophosphat eine wässerige Lösung oder Suspension des Ammoniumpolyphosphates aufsprüht.

7. Verfahren nach Anspruch 6, dadurch gekennzeichnet, daß man auf das vorgelegte Alkaliorthophosphat eine 0,5 bis 5 gewichtsprozentige Lösung oder Suspension des Ammoniumpolyphosphates aufsprüht.

8. Verfahren nach Anspruch 1 bis 7, dadurch gekennzeichnet, daß man das Ammoniumpolyphosphat in einer Menge von 0,5 bis 5 Gew.%, bezogen auf die eingesetzte Wassermenge, verwendet.

9. Verfahren nach Anspruch 1-8, dadurch gekennzeichnet, daß das Ammoniumpolyphosphat einen ganzzahligen Durchschnittswert von 10-1 000 besitzt und das Verhältnis von m/n etwa 1 beträgt.

**Claims**

1. Process for making granulated, partially or completely hydrated alkali metal orthophosphates

which comprises: intensively mixing and granulating anhydrous or partially hydrated alkali metal orthophosphates presenting a degree of hydration of less than 90 %, based on the theoretically possible degree of hydration, and containing an at least 20 % proportion of particles with a size of less than 0.045 mm, in the presence of a quantity of water producing at most a complete hydration of the alkali metal orthophosphates, and with an ammonium polyphosphate, this latter presenting a degree of condensation of 3 up to 1,000 and being used in a proportion of about 0.5 to 8 weight %, based on the quantity of water used.

2. Process as claimed in claim 1, wherein anhydrous alkali metal orthophosphate consisting to an extent of 20 to 100 % of particles with a size of less than 0.045 mm, 0 to 80 % of particles with a size of 0.045 mm to 0.1 mm, and 0 to 50 % of particles with a size larger than 0.1 mm is granulated.

3. Process as claimed in claim 1 or 2, wherein the partially hydrated alkali metal orthophosphate is hydrated to an extent of 0.05 to 50 %.

4. Process as claimed in claims 1 to 3, wherein the water used for granulating is employed in a proportion of at least 10 weight %, based on the anhydrous alkali metal orthophosphate.

5. Process as claimed in claims 1 to 4, wherein the ammonium polyphosphate has the following general formula

$$H_{(n-m)+2}(NH_4)_mP_nO_{3n+1}$$

in which n stands for a whole number with an average value of 3 to 1,000, m stands for a whole number of at most n + 2, and m/n is about 1.0 to 1.67.

6. Process as claimed in claims 1 to 5, wherein the granulate is made by spraying water with vigorous agitation on to a blend of anhydrous or partially hydrated alkali metal orthophosphate and ammonium polyphosphate, or by spraying an aqueous solution or suspension of the ammonium polyphosphate on to the alkali metal orthophosphate.

7. Process as claimed in claim 6, wherein an aqueous about 0.5 to 5 weight % solution or suspension of ammonium polyphosphate is sprayed on to the alkali metal orthophosphate.

8. Process as claimed in claims 1 to 7, wherein the ammonium polyphosphate is used in a proportion of 0.5 to 5 weight %, based on the quantity of water used.

9. Process as claimed in claims 1 to 8, wherein the ammonium polyphosphate has an integral average value of 10 to 1,000 and the ratio of m/n is about 1.

**Revendications**

1. Procédé de préparation d'orthophosphates alcalins granulés, partiellement ou complètement hydratés, caractérisé en ce que l'on mélange énergiquement et on granule des orthophosphates alcalins anhydres ou partiellement hydratés présentant un degré d'hydratation inférieur à 90 %, par rapport au degré d'hydratation théorique, et une fraction de particules d'une granulométrie inférieure à 0,045 mm d'au moins 20 %, en présence d'une quantité d'eau produisant au plus une hydratation complète des orthophosphates alcalins et d'un polyphosphate d'ammonium, ce dernier présentant un degré de condensation de 3 à 1 000 et étant utilisé en une quantité de 0,5 à 8 % en poids, par rapport à la quantité d'eau utilisée.

2. Procédé selon la revendication 1, caractérisé en ce que l'on granule un orthophosphate alcalin anhydre présentant la répartition granulométrique suivante : $< 0{,}045$ mm = 20 à 100 % ; 0,045 à 0,1 mm = 0 à 30 % ; $> 0{,}1$ mm = 0 à 50 %.

3. Procédé selon la revendication 1 ou 2, caractérisé en ce que l'orthophosphate alcalin partiellement hydraté utilisé est hydraté à un taux de 0,05 à 50 %.

4. Procédé selon les revendications 1 à 3, caractérisé en ce que l'on utilise pour la granulation une quantité d'eau d'au moins 10 % en poids, par rapport à l'orthophosphate alcalin anhydre.

5. Procédé selon les revendications 1 à 4, caractérisé en ce que le polyphosphate d'ammonium répond à la formule générale

$$H_{(n-m)+2}(NH_4)_mP_nO_{3n+1}$$

dans laquelle n représente un nombre entier d'une valeur moyenne de 3 à 1 000, m représente un nombre entier égal au plus à n + 2 et m/n est de 1,0 à 1,67.

6. Procédé selon les revendications 1 à 5, caractérisé en ce que, pour la préparation du granulé, on projette de l'eau en agitant énergiquement sur un mélange d'orthophosphate alcalin anhydre ou partiellement hydraté et de polyphosphate d'ammonium, ou bien on projette une solution ou suspension aqueuse du polyphosphate d'ammonium sur l'orthophosphate alcalin.

7. Procédé selon la revendication 6, caractérisé en ce que l'on projette une solution ou suspension à 0,5 à 5 % en poids de polyphosphate d'ammonium sur l'orthophosphate alcalin.

8. Procédé selon les revendications 1 à 7, caractérisé en ce que l'on utilise le polyphosphate d'ammonium en proportion de 0,5 à 5 % en poids, par rapport à la quantité d'eau utilisée.

9. Procédé selon les revendications 1 à 8, caractérisé en ce que le polyphosphate d'ammonium présente un nombre entier d'une valeur moyenne de 10 à 1 000 et un rapport m/n d'environ 1.